# EUROPÄISCHE PATENTSCHRIFT

(11) **EP 3 129 161 B1**
(45) Veröffentlichungstag und Bekanntmachung des Hinweises auf die Patenterteilung: **18.04.2018**
(21) Anmeldenummer: 15722525.1
(22) Anmeldetag: 12.05.2015
(51) Int. Cl.: C23C 22/08, C23C 22/83, B05D 3/10, B05D 7/14, B05D 7/00, B05D 1/06, C09D 5/03, C09D 5/08, C09D 163/00, C09D 167/00

(54) **VERFAHREN ZUR KORROSIONSSCHUTZBEHANDLUNG UND DAMIT BEHANDELTES METALLISCHES BAUTEIL**
METHOD FOR ANTI-CORROSION TREATMENT AND METAL PART TREATED THEREWITH
PROCÉDÉ DE TRAITEMENT DE PROTECTION CONTRE LA CORROSION ET COMPOSANT MÉTALLIQUE TRAITÉ PAR LEDIT TRAITEMENT

(30) Priorität: 05.06.2014 DE 102014210708
(43) Veröffentlichungstag der Anmeldung: 15.02.2017
(73) Patentinhaber: Siemens Aktiengesellschaft, 80333 München (DE)
(72) Erfinder: KÜHN, Walter, 63477 Maintal (DE)
(86) Internationale Anmeldenummer: PCT/EP2015/060473
(87) Internationale Veröffentlichungsnummer: WO 2015/185336

(56) Entgegenhaltungen:
- WO-A2-2006/050915
- DE-A1- 19 511 573
- US-A1- 2007 071 998
- E. ALMEIDA ET AL: "Alternative environmentally friendly coatings for mild steel and electrogalvanized steel to be exposed to atmospheres", MATERIALS AND CORROSION/WERKSTOFFE UND KORROSION, Bd. 52, Nr. 12, Dezember 2001 (2001-12), Seiten 904-919, XP055203490, ISSN: 0947-5117, DOI: 10.1002/1521-4176(200112)52:12<904::AID-MA CO904>3.0.CO;2-B

## Beschreibung

Die Erfindung betrifft ein Verfahren zur Korrosionsschutzbehandlung. Sie betrifft weiter ein Bauteil, welches korrosionsschutzbehandelt wurde.

Stahl ist als Baustoff weit verbreitet. Er ist preiswert und vielseitig verwendbar, aber er korrodiert an der Atmosphäre, im Wasser und im Erdboden. Die Korrosion von Stahl kann durch verschiedene Verfahren zur Korrosionsschutzbehandlung verhindert werden, am wirksamsten durch Beschichtungen. Die Normen-Reihe DIN EN ISO 12944 enthält in 8 Teilen alle wichtigen Angaben zum Korrosionsschutz von Stahlbauten durch Beschichtungssysteme.

Für die Festlegung der Umgebungsbedingungen werden in DIN EN ISO 12944-2 für atmosphärische Umgebungsbedingungen (C) die folgenden Korrosivitätskategorien festgelegt:
- C1: Unbedeutend
   Nur innen: Geheizte Gebäude mit neutralen Atmosphären
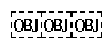 - C2: Gering
   Ländliche Bereiche, ungeheizte Gebäude, in denen Kondensation auftreten kann, z. B. Lager, Sporthallen
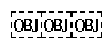 - C3 : Mäßig
   Stadt- und Industrieatmosphäre mit mäßiger Luftverunreinigung, Küstenbereiche mit geringer Salzbelastung, Produktionsräume mit hoher Luftfeuchte und etwas Luftverunreinigung (z. B. Lebensmittelherstellung, Wäschereien, Brauereien)
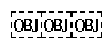 - C4 : Stark
   Industrielle Bereiche, Küstenbereiche mit mäßiger Salzbelastung, Chemieanlagen, Schwimmbäder
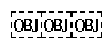 - C5-I: Sehr stark (Industrie)
   Industrielle Bereiche mit hoher Luftfeuchte und aggressiver Atmosphäre
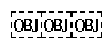 - C5-M: Sehr stark (Meer)

Küsten- und Offshorebereich mit hoher Salzbelastung, Gebäude mit nahezu ständiger Kondensation und mit starker Luftverunreinigung Die US 2007/071998 A1 beschreibt ein Verfahren zum Verkupfern, die DE 195 11 573 A1 ein Verfahren zum Phosphatieren, Passivieren und Lackieren.

Die Schrift von E. ALMEIDA ET AL: "Alternative environmentally friendly coatings for mild steel and electrogalvanized steel to be exposed to atmospheres", MATERIALS AND CORROSION/WERKSTOFFE UND KORROSION, Bd. 52, Nr. 12, Dezember 2001 (2001-12), Seiten 904-919 beschreibt Beschichtungssysteme für Marineanwendungen.

Bauteile, für die hohe Korrosionsschutzanforderungen bestehen (insbesondere die letztgenannten Kategorie C5-M), müssen aufwändig vorbehandelt und beschichtet werden, um diese Anforderungen zu erfüllen. Für das Erreichen der in der genannten DIN-Norm geforderten Werte ist für solche Bauteile bisher eine der folgenden Beschichtungsvarianten erforderlich:
- Strahlen, Grundieren mit Epoxi-Primer, Pulverdecklack
- Entfetten, Zinkphosphatieren, Grundieren mit Epoxi-Primer (oder Beschichtung mittels kathodischer Tauchlackierung), Pulverdecklack
- Feuerverzinken, Grundieren mit Epoxi-Primer, Pulverdecklack
- Entfetten, Phosphatieren, Passivieren mit einer Chrom(IV)-haltigen Passivierung, Pulverdecklack
- Entfetten, galvanisch Verzinken/Gelbchromatieren, Pulverdecklack

Die genannten Verfahren sind technisch vergleichsweise aufwändig und dementsprechend material-, zeit- und kostenintensiv. Zudem ist das Passivieren mit einer Chrom(IV)-haltigen Passivierung sowie das Gelbchromatieren mit erheblichen Gefahren verbunden, da die verwendeten Chromionen toxisch, stark ätzend in erheblichem Maße umweltgefährdend sind. Aus diesem Grund sind die beiden letztgenannten Verfahren aufgrund gesetzlicher Verbote in kurzer Zeit auch nicht mehr anwendbar.

Es ist daher Aufgabe der Erfindung, ein Verfahren zur Korrosionsschutzbehandlung anzugeben, welches eine technisch besonders einfache Beschichtung metallischer Bauteile erlaubt und gleichzeitig hohe und höchste Korrosivitätskategorien erreicht.

Diese Aufgabe wird erfindungsgemäß durch die folgenden Verfahrensschritte gelöst:
- Kupferpassivieren mittels einer Wasserspüle mit zugesetzter Kupfer(II)-nitrat-Lösung,
- anschließendes Beschichten mit einem Pulverlack, welcher einen Polyesterharzanteil und einen Epoxidharzanteil aufweist, wobei zuvor ein Eisenphosphatieren des Bauteils erfolgt.

Die Erfindung geht dabei von der Überlegung aus, dass durch den kombinierten Einsatz einer Kupferpassivierung und einem Epoxi-Polyesterpulver zu einer Reaktion der Kupfersäure mit den funktionellen Anteilen in der Pulvermischung kommt. Hierbei hat sich überraschend herausgestellt, dass die genannte Reaktion eine so große Verbesserung des Korrosionsschutzes bewirkt, dass auf eine aufwändige Vorbehandlung (Strahlen, Zinkphosphatieren, Feuerverzinken, Chrom(IV)-Passivieren, galvanisches Verzinken/Gelbchromatieren) gänzlich verzichtet werden kann. Ein Zweischicht-Aufbau aus einer Epoxi-Grundierung mit anschließender Pulverdecklackierung kann ebenfalls entfallen.

Die Eisenphosphatierung bewirkt bereits einen guten Korrosionsschutz des Grundmaterials und schafft sehr gute Voraussetzungen für eine optimale Haftung des später folgenden Pulverauftrages. Dafür verwendete Phosphatierlösungen bestehen hauptsächlich aus sauren Alkaliphosphaten und freier Phosphorsäure. Durch die einleitende Beizreaktion, wird Fe++ freigesetzt und reagiert unter Bildung von schwerlöslichem Eisenphosphat mit den Phosphationen aus der Lösung und scheidet sich fest haftend an der Metalloberfläche ab. Somit wird eine sehr dünne, schwermetallfreie Konversionsschicht gebildet.

In weiterer vorteilhafter Ausgestaltung des Verfahrens erfolgt zuvor (d. h. vor dem Eisenphosphatieren) ein Entfetten des Bauteils. Beim Entfetten wird eine metallisch reine Oberfläche erzeugt. Dies geschieht mit so genannten Entfettungsmitteln. Das können organische Lösemittel, wie CKW, FKW, FCKW oder auch nicht halogenisierte Mittel sein. Als Alternative bieten sich noch wässrige Lösungen an.

In besonders vorteilhafter Ausgestaltung wird eine mehr als 10-prozentige, vorzugsweise mehr als 25-prozentige Kupfer (II)-nitrat-Lösung verwendet. Die genannten Grenzen wurden dabei in Versuchsreihen ermittelt. Als besonders geeignet für den gewünschten Anwendungszweck in der Korrosionsschutzbehandlung mit dem beschriebenen Verfahren hat sich hierbei die Lösung Deoxylyte® 65 NC der Firma Henkel® KGaA herausgestellt. Hiermit lassen sich besonders hohe Korrosionsschutzkategorien erreichen.

In weiterer vorteilhafter Ausgestaltung wird die Kupfer(II)-nitrat-Lösung in einer Konzentration von weniger als 100 ppm, vorzugsweise weniger als 30 ppm der Wasserspüle zugesetzt wird. Die genannten Grenzen wurden dabei in Versuchsreihen ermittelt. Es genügen somit bereits geringe Mengen der Lösung, die zudem einer einfachen Stadtwasserspüle zugesetzt werden können. Die Bauteile werden in das mit der Lösung versetzte Wasser getaucht.

Vorteilhafterweise wird die Kupfer(II)-nitrat-Lösung in einer Konzentration von mehr als 1 ppm, vorzugsweise weniger als 10 ppm der Wasserspüle zugesetzt. Die genannten Grenzen wurden dabei in Versuchsreihen ermittelt. Hierdurch wird gewährleistet, dass die eine ausreichende Menge der Kupfersäure an den Bauteilen haftet, um die gewünschten hohen Korrosionskategorien zu erreichen. Niedrigere Konzentrationen reichen hierzu gegebenenfalls nicht aus.

Vorteilhafterweise beträgt der Polyesterharzanteil im verwendeten Pulverlack mehr als 20 %, vorzugsweise mehr als 45 %. Ebenso beträgt vorteilhafterweise der Epoxidharzanteil mehr als 20 %, vorzugsweise mehr als 45 % beträgt. Die genannten Grenzen wurden dabei in Versuchsreihen ermittelt. Der verwendete Pulverlack weist also vorteilhaft nahezu 50 % Epoxi- und 50 % Polyesteranteil auf. Als besonders geeignet für den gewünschten Anwendungszweck in der Korrosionsschutzbehandlung mit dem beschriebenen Verfahren hat sich hierbei das Beschichtungspulver IGP-DURA®mix 332M der Firma IGP Pulvertechnik AG herausgestellt. Hiermit lassen sich besonders hohe Korrosionsschutzkategorien erreichen.

Ein metallisches Bauteil wurde vorteilhafterweise mit dem beschriebenen Verfahren korrosionsschutzbehandelt. Das Bauteil erreicht hierdurch hohe und höchste Korrosionsschutzkategorien.

Das Bauteil besteht dabei vorteilhafterweise zumindest teilweise aus Stahl.

Die mit der Erfindung erzielten Vorteile bestehen insbesondere darin, dass durch die Kombination einer Spüle mit verdünnter Kupfersäure und einer anschließenden Beschichtung mit einem Epoxi-Polyester-Hybridpulver mit einem vergleichsweise einfachen Verfahren die höchste Korrosionsschutzkategorie C5-M erreicht werden kann. Der neue, vereinfachte Prozess lautet nunmehr: Entfetten, Eisenphosphatieren, Kupferpassivieren, Pulverdecklack. Das Verfahren ist dabei technisch derart einfacher, dass die Anmelderin am Standort Frankfurt am Main alleine eine jährliche Einsparung von EUR 400.000 erwartet.

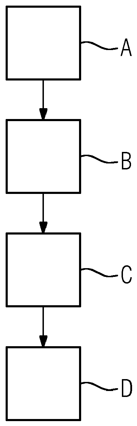

Die Erfindung wird anhand einer Zeichnung näher erläutert. Darin zeigt die einzige Figur schematisch den Ablauf eines Verfahrens zur Korrosionsschutzbehandlung.

Die Figur zeigt schematisch die Ablaufschritte verschiedener Ausführungsformen von Verfahren zur Korrosionsschutzbehandlung eines Bauteils. In Schritt A erfolgt zunächst ein Entfetten. Dieser Schritt A gehört zu den Standardverfahren und ist nicht Kern des beschriebenen Verfahrens. Dem Fachmann werden vielfältige Möglichkeiten der Entfettung bekannt sein, die im Wesentlichen eine Reinigung der weiter zu behandelnden Oberfläche darstellt. Die Entfettung auf Lösemittelbasis führt im Allgemeinen zu den besten Ergebnissen und ist, sofern sie auf modernen Anlagen ausgeführt wird, auch aus Umwelt- und Arbeitsschutzgründen unbedenklich. Die Entfettung auf wässriger Basis (sauer, alkalisch oder neutral) ist gleichfalls möglich.

In Schritt B wird sodann eine Eisenphosphatierung durchgeführt. Hierbei wird durch chemische Reaktionen der metallischen Oberfläche des Bauteils mit wässrigen Phosphat-Lösungen eine sogenannte Konversionsschicht aus fest haftenden Metallphosphaten gebildet. Hierbei erfolgt zunächst ein Beizangriff auf den Grundwerkstoff, bei dem Metallkationen unter Wasserstoffentwicklung in Lösung gehen. Dann erfolgt die Schichtbildung durch Ausfällung schwerlöslicher Eisenphosphate. Auch dieser Schritt B gehört zu den Standardverfahren und ist nicht Kern des beschriebenen Verfahrens. Dem Fachmann werden vielfältige Möglichkeiten der Eisenphosphatierung bekannt sein.

Kern des Verfahrens bilden die im Folgenden erläuterten Schritte C und D des Verfahrens. In allen Ausführungsformen umfasst Schritt C das Kupferpassivieren mittels einer Wasserspüle mit zugesetzter Kupfer(II)-nitrat-Lösung, und Schritt D ein Beschichten mit einem Pulverlack, welcher einen Polyesterharzanteil und einen Epoxidharzanteil aufweist.

In Schritt C wird in einzelnen Ausführungsbeispielen eine mehr als 10-prozentige, in noch vorteilhafteren Ausführungsbeispielen eine mehr als 25-prozentige Kupfer(II)-nitrat-Lösung verwendet. Die Kupfer(II)-nitrat-Lösung wird in Ausführungsbeispielen des Verfahrens in einer Konzentration zwischen 1 und 100 ppm, in noch vorteilhafteren Ausführungsbeispielen zwischen 10 und 30 ppm der Wasserspüle zugesetzt. Die Wasserspüle kann dabei als einfache Stadtwasserspüle ausgestaltet sein.

In Schritt D beträgt der Polyesterharzanteil in den in Ausführungsbeispielen verwendeten Pulverlacken mehr als 20 %, vorzugsweise mehr als 45 %. Ebenso beträgt der Epoxidharzanteil in den Ausführungsbeispielen mehr als 20 %, vorzugsweise mehr als 45 %. In der vorteilhaftesten Ausführungsform weist der verwendete Pulverlack nahezu 50 % Epoxi- und 50 % Polyesteranteil auf.

Zu den Ausführungsbeispielen wurden verschiedene Versuchsreihen durchgeführt.

Die Vorteile der beschriebenen Ausführungsbeispiele werden anhand einer Versuchsdurchführung zu einem ganz besonders vorteilhaften Ausführungsbeispiel erläutert:
In diesem Ausführungsbeispiel wurde ein Stahlblech dem Verfahren unterzogen. Nach Schritt A, dem Entfetten, wurde in Schritt B eine 2-prozentige Lösung Duridine® der Firma Henkel®, pH 4,5-5 bei einer Temperatur von 40 Grad Celsius verwendet. Sodann erfolgte in Schritt C eine mehrfache Spülung in einer Stadtwasserspüle mit in einer Konzentration von 10-30 ppm der Lösung Deoxylyte® 65 NC der Firma Henkel® KGaA. In Schritt D wurde das so vorbehandelte Stahlblech am Handpulverstand mittels Coronapistolen mit dem Beschichtungspulver IGP-DURA®mix 332M der Firma IGP Pulvertechnik AG beschichtet und im Durchlaufofen eingebrannt.

Das so entstandene Stahlblech wurde dann auf seine Korrosionsbeständigkeit für die Kategorie C5-M (mittel) der Norm EN ISO 12944-6 geprüft. Hierbei wird die Pulverschichtdicke des Stahlbleches ermittelt, sodann ein Gitterschnitt nach IS0 2409 durchgeführt. Anschließend erfolgt eine Korrosionsprüfung in Form einer Salzsprühnebelprüfung für 720 Stunden. Anschließend erfolgt ein weiterer Gitterschnitt nach IS0 2409.

Zur Erfüllung der Norm dürfen nach der Korrosionsprüfung keine erkennbaren Blasen, Rostbildungen, Risse oder Abblätterungen vorhanden sein. Die Korrosion der Unterwanderung am durch den Gitterschnitt erzeugten Ritz darf nicht mehr als 1 mm sein.

Die Schichtdicke betrug ca. 100 Mikrometer. Am unbeschädigten Blech wurden sämtliche Anforderungen erfüllt. Hinsichtlich der Unterwanderung am Ritz konnten Werte unterhalb von 1 mm, je nach verwendetem Blech bis hinunter auf lediglich 0,3 mm erreicht werden. Die Beschichtung erfüllt damit die Kriterien der Korrosivitätskategorie C5-M (mittel).

Dies ist umso überraschender, da Verfahren, bei denen eine Phosphatierung zur Anwendung kommt, für die Korrosivitätskategorie C5-M nicht empfohlen werden. Dies geht beispielsweise aus dem Prospekt "Sicherer und dauerhafter Korrosionsschutz durch IGP Pulvergrundierungen" der Herstellerin des verwendeten Pulverlackes IGP® hervor. Hier wird in jedem Fall ein Feuerverzinken oder Strahlen empfohlen. Gleiches wird in dem Fachbuch "Industrielle Pulverbeschichtung" von Judith Pietschmann empfohlen.

Die oben beschriebenen Schritte C und D stellen jedoch vollkommen überraschend eine derartig qualitativ hochwertige Beschichtung zur Verfügung, dass vollkommen entgegen der bisherigen Überzeugungen des Fachmanns auf ein Feuerverzinken oder Strahlen verzichtet werden kann.

## Patentansprüche

1. Verfahren zur Korrosionsschutzbehandlung eines metallischen Bauteils, **gekennzeichnet durch** die Verfahrensschritte:
- Kupferpassivieren mittels einer Wasserspüle mit zugesetzter Kupfer(II)-nitrat-Lösung,
- anschließendes Beschichten mit einem Pulverlack, welcher einen Polyesterharzanteil und einen Epoxidharzanteil aufweist, wobei
zuvor ein Eisenphosphatieren des Bauteils erfolgt.

2. Verfahren nach Anspruch 1, bei dem zuvor ein Entfetten des Bauteils erfolgt.

3. Verfahren nach einem der vorhergehenden Ansprüche, bei dem eine mehr als 10-prozentige, vorzugsweise mehr als 25-prozentige Kupfer(II)-nitrat-Lösung verwendet wird.

4. Verfahren nach einem der vorhergehenden Ansprüche, bei dem die Kupfer(II)-nitrat-Lösung in einer Konzentration von weniger als 100 ppm, vorzugsweise weniger als 30 ppm der Wasserspüle zugesetzt wird.

5. Verfahren nach einem der vorhergehenden Ansprüche, bei dem die Kupfer(II)-nitrat-Lösung in einer Konzentration von mehr als 1 ppm, vorzugsweise weniger als 10 ppm der Wasserspüle zugesetzt wird.

6. Verfahren nach einem der vorhergehenden Ansprüche, bei dem der Polyesterharzanteil mehr als 20 %, vorzugsweise mehr als 45 % beträgt.

7. Verfahren nach einem der vorhergehenden Ansprüche, bei dem der Epoxidharzanteil mehr als 20 %, vorzugsweise mehr als 45 % beträgt.

8. Metallisches Bauteil, welches mit dem Verfahren nach einem der vorhergehenden Ansprüche korrosionsschutzbehandelt wurde.

9. Metallisches Bauteil nach Anspruch 8, welches zumindest teilweise aus Stahl besteht.

## Claims

1. Method for the anti-corrosion treatment of a metallic component, **characterized by** the method steps of:
- copper-passivating by means of a water rinse with added copper(II) nitrate solution,
- subsequently coating with a powder coating material which has a polyester resin fraction and an epoxy resin fraction, where
the component is iron-phosphated beforehand.

2. Method according to Claim 1, wherein the component is degreased beforehand.

3. Method according to either of the preceding claims, wherein the copper(II) nitrate solution used has a strength of more than 10 percent, preferably more than 25 percent.

4. Method according to any of the preceding claims, wherein the copper(II) nitrate solution is added in a concentration of less than 100 ppm, preferably less than 30 ppm, to the water rinse.

5. Method according to any of the preceding claims, wherein the copper(II) nitrate solution is added in a concentration of more than 1 ppm, preferably less than 10 ppm, to the water rinse.

6. Method according to any of the preceding claims, wherein the polyester resin fraction is more than 20%, preferably more than 45%.

7. Method according to any of the preceding claims, wherein the epoxy resin fraction is more than 20%, preferably more than 45%.

8. Metallic component which has been anti-corrosion-treated by the method according to any of the preceding claims.

9. Metallic component according to Claim 8, consisting at least partially of steel.

## Revendications

1. Procédé de traitement de protection contre la corrosion d'une pièce métallique, **caractérisé par** les stades de procédé:
- passivation au cuivre au moyen d'un lavage à l'eau par l'addition d'une solution de nitrate de cuivre (II),
- revêtement ensuite par un vernis en poudre, qui a une proportion de résine de polyester et une proportion de résine époxyde, dans lequel
on effectue auparavant une phosphatation au fer de la pièce.

2. Procédé suivant la revendication 1, dans lequel on effectue d'abord un dégraissage de la pièce.

3. Procédé suivant l'une des revendications précédentes, dans lequel on utilise une solution de nitrate de cuivre (II) à plus de 10 pour cent, de préférence à plus de 25 pour cent.

4. Procédé suivant l'une des revendications précédentes, dans lequel on additionne la solution de nitrate de cuivre (II) en une concentration représentant moins de 100 ppm, de préférence moins de 30 ppm du lavage à l'eau.

5. Procédé suivant l'une des revendications précédentes, dans lequel on additionne la solution de nitrate de cuivre (II) en une concentration représentant plus de 1 ppm, de préférence moins de 10 ppm du lavage à l'eau.

6. Procédé suivant l'une des revendications précédentes, dans lequel la proportion de résine de polyester est supérieure à 20 %, en étant de préférence supérieure à 45 %.

7. Procédé suivant l'une des revendications précédentes, dans lequel la proportion de résine époxyde est supérieure à 20 %, en étant de préférence supérieure à 45 %.

8. Pièce métallique, qui a été traitée pour la protection contre la corrosion par le procédé suivant l'une des revendications précédentes.

9. Pièce métallique suivant la revendication 8, qui est, au moins en partie, en acier.
